# EUROPÄISCHE PATENTSCHRIFT

(11) **EP 0 746 130 B1**
(45) Veröffentlichungstag und Bekanntmachung des Hinweises auf die Patenterteilung: **16.07.2003**
(21) Anmeldenummer: 96108526.3
(22) Anmeldetag: 29.05.1996
(51) Int. Cl.: H04M 1/57, H04M 1/274

(54) **Tragbares Funkkommunikationsgerät mit Speicher und Sortiereinrichtung für Rufnummern**
Portable radio communication device with memory and sorting means for telephone numbers
Appareil de communication radio portable avec mémoire et moyens de classement des numéros de téléphone

(30) Priorität: 01.06.1995 DE 19520219
(43) Veröffentlichungstag der Anmeldung: 04.12.1996
(73) Patentinhaber: SIEMENS AKTIENGESELLSCHAFT, 80333 München (DE)
(72) Erfinder: Bocionek, Siegfried, Dr., 91056 Erlangen (DE); Schütt, Dieter, Prof.-Dr., 81825 München (DE)

(56) Entgegenhaltungen:
- EP-A- 0 396 947
- EP-A- 0 477 854
- DE-A- 3 806 550
- DE-A- 3 831 670
- GB-A- 2 268 663
- US-A- 5 034 976
- US-A- 5 251 250
- PATENT ABSTRACTS OF JAPAN vol. 018, no. 329 (E-1566), 22.Juni 1994 & JP-A-06 078047 (KYOCERA CORP)

## Beschreibung

Der weltweit rasch voranschreitende Ausbau der Kommunikationsnetze in Verbindung mit immer kürzer werdenden Entscheidungsfristen, führt dazu, daß der moderne Mensch direkt fernmündlich erreichbar sein muß. Funktelefone stellen hier eine globale Erreichbarkeit sicher. Diese Mobiltelefone sind inzwischen weit verbreitet. Sie werden jedoch oft zum Leidwesen der Mitmenschen häufig dort verwendet, wo es stört. Beispielsweise geschieht es in Restaurants, Theatern, oder sogar auf Beerdigungen.

Wer ein Mobiltelefon besitzt, will überall wo er es bei sich trägt, erreichbar sein.

Aus [1], [2], [3] und [4] sind verschiedene Telefone, auch Mobiltelefone, bekannt, welche Nummernspeicher aufweisen zur Speicherung von Telefonnummern von Anrufern.

Ferner ist aus [4] bekannt, Ausgangshäufigkeiten von ausgehenden Telefonanrufen und deren zugehörigen Telefonnummern zu bestimmen, mit welchen Ausgangshäufigkeiten die jeweiligen Telefonnummern angerufen werden. Unter Verwendung der Häufigkeiten der jeweiligen Telefonnummern werden die angerufenen Telefonnummern in einem Nummernverzeichnis sortiert.

Die der Erfindung zugrundeliegende Aufgabe besteht darin, ein Funktelefon anzugeben, mit dem man überall erreichbar ist, das jedoch die Störungen der Umgebung durch Mobiltelefone verringert.

Diese Aufgabe wird gemäß den Merkmalen des Patentanspruches 1 gelöst.

Weiterbildungen der Erfindung ergeben sich aus den abhängigen Ansprüchen.

Besonders vorteilhaft wird mit der Erfindung ein Anrufbeantworter in einem Funktelefon integriert, so können jederzeit Anrufe entgegengenommen werden und bei Anlässen, bei denen es nicht schicklich ist, zu telefonieren, ist man trotzdem erreichbar und kann anschließend an einem ungestörten Ort den Anrufenden zurückrufen. Vorteilhaft ist im erfindungsgemäßen Funktelefon ein Speicher vorgesehen, mit dem die Nummern jener Anrufer abgespeichert werden können,
die eine Nachricht hinterlassen haben. So kann im Anschluß wenn die Möglichkeit zu telefonieren besteht, ein automatischer Rückruf der Anrufenden veranlaßt werden.

Günstigerweise ist beim erfindungsgemäßen Funktelefon eine Ausgabevorrichtung für die Ausgabe der gespeicherten Anrufer-Telefonnummern vorgesehen.

Vorteilhaft besitzt das erfindungsgemäße Funktelefon eine Vorrichtung zur Auswahl der gespeicherten Telefonnummern, um die Reihenfolge der Rückrufe bestimmen zu können. Besonders vorteilhaft ist beim erfindungsgemäßen Funktelefon eine automatische Vergleichs- und Sortiervorrichtung für gespeicherte Telefonnummern vorgesehen. Anhand der gespeicherten Nummern und der Auswahl, die der Benutzer des Telefons trifft, kann die Vergleichsvorrichtung feststellen wie oft welche eingegangene Nummer als erste zurückgerufen wird und so eine Reihenfolge erstellen, welche eine Priorität bezüglich des jeweiligen Telefonbenutzers mit Hinblick auf die bevorzugt zu wählenden Telefonnummern wiedergibt. Die Vergleichsvorrichtung kann so über einen längeren Zeitraum arbeiten und die Nummern eingehender Telefonanrufe so automatisch gemäß der Priorität des Telefonbenutzers sortieren. Die wichtigsten Nummern stehen so immer vorne im Abrufspeicher zur Ausgabe durch den Benutzer gemäß seinem Rückrufprofil bereit.

Vorteilhaft ist eine optische Ausgabevorrichtung für die gespeicherten Telefonnummern vorgesehen. Besonders vorteilhaft ist eine akustische Ausgabevorrichtung für gespeicherte Telefonnummern vorgesehen, da man so zur Auswahl einer anzurufenden Telefonnummer nicht den Blick auf das Telefon richten muß.

Vorteilhafterweise ist beim erfindungsgemäßen Gerät eine akustische Eingabevorrichtung für Telefonnummern vorgesehen.

So kann eine gespeicherte Telefonnummer ausgewählt werden oder eine neue Telefonnummer per Sprache eingegeben werden.

Besonders vorteilhaft wird das erfindungsgemäße Funktelefon nach einem Verfahren betrieben, bei dem eingehende Telefonnummern von zu speichernden Anrufen abgespeichert werden. Vorteilhafterweise geschieht dies über einen längeren Zeitraum, so daß von einem Prozessor im Telefon überwacht werden kann, welche Nummern am häufigsten benutzt worden sind und welche Nummern der Benutzer des Telefones priorisiert. Die priorisierten Telefonnummern können dann gemäß dem erfindungsgemäßen Verfahren immer vorne im Speicher umsortiert werden, so daß der Telefonbenutzer automatisch die wichtigsten Telefonnummern erhält, wenn er diese eine nach der andern aus dem Speicher abruft. Der Sortiervorgang muß dabei aber nicht unbedingt physikalisch durch Umstellung der Speicherinhalte erfolgen, sondern es können beispielsweise auch die Pointer, welche auf Speicherinhalte verweisen entsprechend umdefiniert werden. So wird sichergestellt, daß die wichtigsten Anrufer für den Benutzer umgehend zurückgerufen werden können.

Im folgenden wird die Erfindung anhand von Figuren weiter erläutert.
- Figur 1: zeigt ein erfindungsgemäßes Funktelefon.
- Figur 2: zeigt schematisiert ein Blockschaltbild eines Funktelefones.

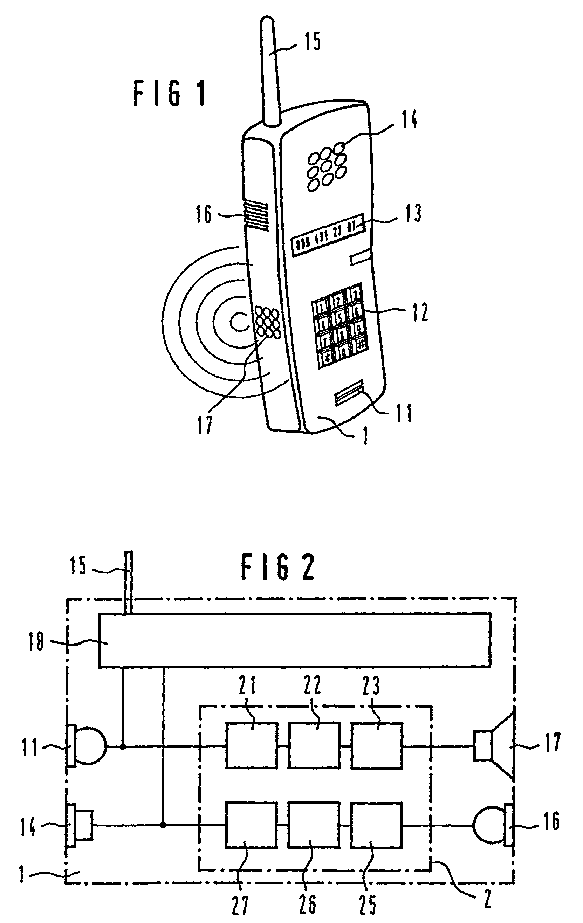

In Figur 1 ist ein Beispiel eines erfindungsgemäßen Funktelefones dargestellt. Die hier dargestellte Ausführungsform besteht aus den üblichen Komponenten, mit denen ein Funktelefon ausgestattet ist, wie zum Beispiel einem tragbaren Gehäuse 1, einem Mikrofon 11, einer Hörkapsel 14, einem Display 13, einer Wahltastatur 12 und einer Antenne 15. Beispielsweise sind in dieser Ausführungsform ein zusätzliches Mikrofon 16 und ein zusätzlicher Lautsprecher 17 vorgesehen. Mit diesen Ein- und Ausgabemitteln ist es möglich, unabhängig vom Betrieb des Funktelefones den Anrufbeantworter abzuhören und Nachrichten aufzusprechen. Beispielsweise können mit Hilfe des Mikrofones 16 auch Nummern im Nummernspeicher des Anrufbeantworters umgruppiert werden, um eine priorisierte Reihenfolge von rückzurufenden Anrufern zu erstellen. Das Eingabemittel kann aber beispielsweise auch als Kugel ähnlich wie bei einer Computermaus, oder als Minijoystick ausgeführt sein. Das Display 13 kann dabei zur Anzeige der gespeicherten Telefonnummern dienen, beispielsweise mit Hilfe des Eingabemittels die Nummern über das Display bewegt werden können.

Besonders vorteilhaft ist aus Platz- und Gewichtsgründen beim erfindungsgemäßen Mobiltelefon ein möglichst digitaler Anrufbeantworter vorgesehen, damit ist beispielsweise die Erreichbarkeit gegeben, die ein Funktelefon ausmacht, da der Träger des Telefones das Restaurant etc. zum Rückrufen verlassen bzw. später aber immer noch unterwegs wichtige Anrufer zurückrufen kann. Eine automatische Rückrufeinrichtung, die zu jedem gespeicherten Anruf das Anwählen des Anrufers per Knopfdruck erlaubt, stellt beispielsweise eine geeignete komfortable Untersützung bei der Telefonbenutzung dar. Vorteilhaft wird diese Unterstützung dadurch erweitert, daß die gespeicherten Nachrichten gemäß eines Interessenprofils des Handybesitzers sortiert werden, um beispielsweise in der Reihenfolge der Wichtigkeit antworten zu können.

Der Erfindung liegt die Idee zugrunde, daß normalerweise oberflächlich betrachtet, bei einem Funktelefon kein Anrufbeantworter vonnöten ist, da man ja immer erreichbar ist. Vorteilhaft werden jedoch durch die Erfindung Nachteile von solchen Handys vermieden, indem die leicht nachvollziehbare Erkenntnis, daß auch ein Handy am Mann nicht immer bedient werden will oder darf, ausgenutzt wird. Durch Integration eines Anrufbeantworters wird besonders der Zusatznutzen einer möglichen Priorisierung und einer Ausnützung von Interessenprofilen des Telefonbenutzers möglich, da abgespeicherte Telefonnummern hinsichtlich ihrer vom Benutzer ausgewählten Wichtigkeit priorisiert werden und automatisch sortiert werden können. Dieser Nutzen wird lediglich durch die Integration eines Anrufbeantworters möglich und stellt zusätzlich zu der Funktion des Anrufbeantworters eine erweiterte Funktionalität eines Funktelefones her. Beispielsweise enthält das Funktelefon eine automatische Rückrufeinrichtung mit integriertem Anrufspeicher und Interessenselektor und ist als Zusatzbauteil zum Beispiel in Hard- oder Software realisiert. Der Anrufspeicher kann dabei beispielsweise folgende Ausprägungen haben:
- Nummernspeicher, der die Nummer der Anrufenden so speichert, daß sie später per automatischer Rückrufeinrichtung einfach rückgerufen werden können.
- Anrufbeantworter, der zusätzlich zur Nummer wie ein normaler Anrufbeantworter einen Text des Anrufenden mitspeichert.

Beispielsweise läßt die automatische Rückrufeinrichtung dann die Auswahl einer der gespeicherten Nummern zu, zum Beispiel über eine Funktionstaste plus der Registriernummer der gespeicherten Nummer, etwa eins für die erste gespeicherte Nummer, zwei für die zweite usw. Auch das direkte Antippen der Nummer auf einem drucksensitiven Display, wie etwa bei einem Personal Digital Assistant, werden möglich.

In beiden obengenannten Ausprägungen ist es beispielsweise möglich, die Einträge im Anrufspeicher (also entweder nur Nummern, oder auch Texte) automatisch so umzusortieren, daß sie in der für den Benutzer wichtigsten oder interessantesten Reihenfolge abgehört und beantwortet werden können. Zum Beispiel wird der Anruf der Ehefrau zuerst und dann der des Chefs einsortiert.

Das nötige Interessenprofil zur Umsortierung wird beispielsweise vom Interessenselektor durch das Verfahren des Relevance Feedback gewonnen. Zunächst werden über mehrere Wochen beispielsweise alle Anrufe in der eingehenden Reihenfolge im Anrufspeicher eingetragen. Der Interessenselektor wertet dann aus, welche der gespeicherten Nummern der Benutzer in welcher Reihenfolge rückruft. Mit statistischen Methoden kann der Selektor nach einer Weile eine Korrelation von Anrufernummern zur Antwortwichtigkeit aufstellen und dann das Interessenprofil definieren. Dieses Profil bestimmt vorzugsweise die Reihenfolge bei der Umsortierung. Dabei ist zu beachten, daß das Interessenprofil nicht statisch bleibt, sondern im Lauf der Zeit beliebig neuen Interessen oder Prioritäten des Benutzers angepaßt werden kann.
Vorzugsweise kann das erfindungsgemäße Kommunikationsgerät auch mit einer Uhr ausgestattet sein. Diese Uhr ermöglicht es dem Benutzer beispielsweise Rückrufe zeitgesteuert zu veranlassen, oder den Anrufbeantworter zeitgesteuert zu betreiben.

In Figur 2 ist ein Bespiel eines erfindungsgemäßen Funktelefones als Blockschaltbild dargestellt. Die gleichen Komponenten wie in Figur 1 sind mit denselben Bezugszeichen bezeichnet. Mit 18 ist beispielsweise ein integrierter Baustein bezeichnet, der die Funktionen des Funktelefones realisiert und der gleichzeitig den Vergleicher zur Erstellung eines benutzerdefinierten Telefonnummernprofiles enthält. Mit 21 bis 27 sind beispielsweise Speicher oder Stapelspeicher bezeichnet, in denen Nachrichten von Anrufern, oder lediglich deren Telefonnummern abgelegt werden können. Über ein Eingabemittel 16 kann beispielsweise eine Nummer ausgewählt werden und in einem Stapelspeicher an die oberste Ebene gebracht werden. Beispielsweise ist es aber auch möglich, benutzerdefiniert Nummern bzw. gespeicherte Nachrichten in einer definierten Reihenfolge umzusortieren. Weiterhin ist es mit dem erfindungsgemäßen Funktelefon möglich, über die im Baustein 18 realisierte Vergleicherfunktion automatisch ein benutzerspezifisches Rückrufprofil für eingegangene Nachrichten zu erstellen. Nach diesem Profil können Nummern, welche in den Speichern 21 bis 27, bzw. Nachrichten, die dort abgelegt sind, automatisch umsortiert werden. Der Benutzer des Telefones erhält so automatisch beispielsweise per Knopfdruck als erste Nummer zum Rückrufen diejenige Nummer bereitgestellt, welche nach seinem Benutzerprofil die wichtigste ist.

Im Rahmen dieses Dokuments sind folgende Veröffentlichungen zitiert:
[1] US-A-5 251 250 (Obata et al.)
[2] GB-A-2 268 663 (Nippon Electric Co.)
[3] Patent Abstracts of Japan, vol. 018, no. 329 (E-1566), 22. Juni 1994 & JP-A-06 078047 (Kyocera Corp.)
[4] EP-A-0 477 854 (Nokia Mobile Phones LTD)

## Patentansprüche

1. Funktelefon
- mit einem Nummernspeicher (21 bis 27) zur automatischen Speicherung von Telefonnummern, unter welchen das Funktelefon von Anrufern angerufen wird,
- mit einer Vergleichs- und Sortiervorrichtung (18), welche die gespeicherten Telefonnummern vergleicht und sortiert,
**dadurch gekennzeichnet, dass**
die Sortierung entsprechend einer Anrufhäufigkeit, mit welcher das Funktelefon in einem vorgegebenen Zeitraum unter der jeweiligen Telefonnummer angerufen wurde, und einer Rückrufhäufigkeit, mit welcher das Funktelefon in einem vorgegebenen Zeitraum die jeweilige Telefonnummer zurückruft, durchführbar ist.

2. Funktelefon nach Anspruch 1,
bei dem unter Verwendung der Anrufhäufigkeiten der Telefonnummern und der Rückrufhäufigkeiten der Telefonnummern eine Rückrufprioritätenliste erstellbar ist, welche angibt mit welcher Priorität ein unter der jeweiligen Telefonnummer eingehender Anruf zu bearbeiten ist.

3. Funktelefon nach Anspruch 1 oder 2,
bei dem ein integrierter Anrufbeantworter vorgesehen ist.

4. Funktelefon nach einem der vorangehenden Ansprüche,
bei dem eine Ausgabevorrichtung zur Ausgabe gespeicherter Telefonnummern vorgesehen ist.

5. Funktelefon nach Anspruch 4,
bei dem eine optische Ausgabevorrichtung für gespeicherte Telefonnummern vorgesehen ist.

6. Funktelefon nach Anspruch 4,
bei dem eine akustische Ausgabevorrichtung für gespeicherte Telefonnummern vorgesehen ist.

7. Funktelefon nach einem der vorangehenden Ansprüche,
bei dem eine Auswahlvorrichtung zur Auswahl gespeicherter Telefonnummern zum Zwecke des automatischen Rückrufs vorgesehen ist.

8. Funktelefon nach einem der vorangehenden Ansprüche,
bei dem eine akustische Eingabevorrichtung für Telefonnummern vorgesehen ist.

9. Funktelefon nach einem der vorangehenden Ansprüche,
bei dem eine Zeitschaltuhr zur Steuerung mindestens einer Funktion vorgesehen ist.

10. Verfahren zum Betrieb eines Funktelefons,
- bei dem Telefonnummern, unter welchen das Funktelefon in von Anrufern angerufen wird, gespeichert werden,
- bei dem die gespeicherten Telefonnummern verglichen und sortiert werden,
**dadurch gekennzeichnet, dass**
- die Sortierung entsprechend einer Anrufhäufigkeit, mit welcher das Funktelefon in einem vorgegebenen Zeitraum unter der jeweiligen Telefonnummer angerufen wurde, und einer Rückrufhäufigkeit, mit welcher das Funktelefon in einem vorgegebenen Zeitraum die jeweilige Telefonnummer zurückruft, durchgeführt wird.

11. Verfahren nach Anspruch 10,
bei dem unter Verwendung der Anrufhäufigkeiten der Telefonnummern und der Rückrufhäufigkeiten der Telefonnummern eine Rückrufprioritätenliste erstellt wird, welche angibt mit welcher Priorität ein unter der jeweiligen Telefonnummer eingehender Anruf zu bearbeiten ist.

12. Verfahren nach Anspruch 10 oder 11,
bei dem unter Verwendung der Anrufhäufigkeiten der Telefonnummern und der Rückrufhäufigkeiten der Telefonnummern ein Zugriffsprofil erstellte wird, mit welchem eingehende Informationen, insbesondere eingehende Anrufe, automatisch sortiert werden.

## Claims

1. Radio telephone
- having a number store (21 to 27) for automatically storing telephone numbers on which the radio telephone is called by callers,
- having a comparison and sorting apparatus (18) which compares and sorts the stored telephone numbers,
**characterized in that**
sorting can be carried out on the basis of a call frequency with which the radio telephone has been called on the respective telephone number in a prescribed period, and a callback frequency with which the radio telephone calls the respective telephone number back in a prescribed period.

2. Radio telephone according to Claim 1,
in which the call frequencies for the telephone numbers and the callback frequencies for the telephone numbers can be used to create a callback priority list which indicates the priority with which a call incoming on the respective telephone number is to be handled.

3. Radio telephone according to Claim 1 or 2,
in which an integrated telephone answering machine is provided.

4. Radio telephone according to one of the preceding claims,
in which an output apparatus is provided for outputting stored telephone numbers.

5. Radio telephone according to Claim 4,
in which a visual output apparatus for stored telephone numbers is provided.

6. Radio telephone according to Claim 4,
in which an audio output apparatus for stored telephone numbers is provided.

7. Radio telephone according to one of the preceding claims,
in which a selection apparatus is provided for selecting stored telephone numbers for the purpose of automatic callback.

8. Radio telephone according to one of the preceding claims,
in which an audio input apparatus for telephone numbers is provided.

9. Radio telephone according to one of the preceding claims,
in which a time switch is provided for controlling at least one function.

10. Method for operating a radio telephone,
- in which telephone numbers on which the radio telephone is called by callers are stored,
- in which the stored telephone numbers are compared and sorted,
**characterized in that**
- sorting is carried out on the basis of a call frequency with which the radio telephone has been called on the respective telephone number in a prescribed period, and a callback frequency with which the radio telephone calls the respective telephone number back in a prescribed period.

11. Method according to Claim 10,
in which the call frequencies for the telephone numbers and the callback frequencies for the telephone numbers are used to create a callback priority list which indicates the priority with which a call incoming on the respective telephone number is to be handled.

12. Method according to Claim 10 or 11,
in which the call frequencies for the telephone numbers and the callback frequencies for the telephone numbers are used to create an access profile which is used for automatically sorting incoming information, particularly incoming calls.

## Revendications

1. Radiotéléphone
- avec une mémoire à numéros (21 à 27) pour la conservation automatique de numéros de téléphone par lesquels le radiotéléphone a été appelé par des correspondants,
- avec un dispositif (18) de comparaison et de tri qui compare et trie les numéros de téléphone conservés en mémoire,
**caractérisé en ce que**
le tri peut être réalisé en fonction d'une fréquence d'appel à laquelle le radiotéléphone a été appelé pendant un laps de temps prédéterminé par chaque numéro de téléphone, et une fréquence de rappel avec laquelle le radiotéléphone a rappelé le numéro de téléphone correspondant pendant un laps de temps prédéterminé.

2. Radiotéléphone selon la revendication 1, dans lequel une liste de priorités de rappel, qui donne la priorité suivant laquelle un appel entrant en provenance de chaque numéro de téléphone doit être traité, peut être établie en recourant à la fréquence d'appel des numéros de téléphone et à la fréquence de rappel des numéros de téléphone.

3. Radiotéléphone selon la revendication 1 ou 2, dans lequel est prévu un répondeur intégré.

4. Radiotéléphone selon l'une des revendications précédentes, dans lequel un dispositif de présentation pour la présentation des numéros de téléphone conservés en mémoire est prévu

5. Radiotéléphone selon la revendication 4, dans lequel un dispositif optique de présentation des numéros de téléphone conservés en mémoire est prévu.

6. Radiotéléphone selon la revendication 4, dans lequel un dispositif de présentation acoustique des numéros de téléphone conservés en mémoire est prévu.

7. Radiotéléphone selon l'une des revendications précédentes, dans lequel un dispositif de sélection pour la sélection de numéros de téléphone conservés en mémoire est prévu pour le rappel automatique.

8. Radiotéléphone selon l'une des revendications précédentes, dans lequel un dispositif acoustique d'introduction des numéros de téléphone est prévu

9. Radiotéléphone selon l'une des revendications précédentes, dans lequel est prévue une horloge de commutation temporisée pour la commande d'au moins une fonction.

10. Procédé d'utilisation d'un radiotéléphone,
- dans lequel des numéros de téléphone par lequel le radiotéléphone a été appelé par des correspondants sont conservés,
- dans lequel les numéros de téléphone conservés en mémoire sont comparés et triés,
**caractérisé en ce que**
- le tri est réalisé en fonction d'une fréquence d'appel avec laquelle le radiotéléphone a été appelé par chacun des numéros de téléphone pendant un laps de temps prédéterminé et d'une fréquence de rappel avec laquelle le radiotéléphone a rappelé chaque numéro de téléphone pendant un laps de temps prédéterminé.

11. Procédé selon la revendication 10, dans lequel une liste de priorités de rappel, qui indique avec quelle priorité un appel entrant provenant de chaque numéro de téléphone doit être traité, est établie en recourant aux fréquences d'appels des numéros de téléphone et aux fréquences de rappels des numéros de téléphone.

12. Procédé selon la revendication 10 ou 11, dans lequel un profil d'accès avec lequel des informations entrantes, en particulier des appels entrants, sont triées automatiquement est établi en recourant aux fréquences d'appels des numéros de téléphone et aux fréquences de rappels des numéros de téléphone.
